# EUROPEAN PATENT APPLICATION

(11) **EP 2 159 729 A1**
(43) Date of publication of application: **03.03.2010**
(21) Application number: 09164231.4
(22) Date of filing: 30.06.2009
(51) Int. Cl.: G06F 21/00

(54) **Access controlling system, access controlling method, and recording medium having access controlling program recorded thereon**

(30) Priority: 27.08.2008 JP 2008217481
(71) Applicant: Fujitsu Limited, Kawasaki-shi, Kanagawa 211-8588 (JP)
(72) Inventor: Kameda, Jun, Kawasaki-shi, Kanagawa 211-8588 (JP)
(74) Representative: Holtby, Christopher Lawrence

(57) **Abstract**

An access controlling system include a managing domain 2 which generates a virtual file for each domain 3 and each resource 4, determines whether a label can be provided to the generated virtual file, and determines contents of the labels provided to the domain 3 and the resource 4 based on a result of the determination whether the label can be provided, and a hypervisor 1 which controls an access from the domain 3 to the resource 4 by using an access control rule 15 based on the label provided to the domain 3 and the label provided to the resource 4.

## Description

### FIELD

The embodiment discussed herein relates to an access controlling system, an access controlling method, and a recoding medium having an access controlling program recorded thereon, which controls an access from a virtual machine realized on an information processing apparatus to a resource such as a virtual disk volume included in the information processing apparatus. Particularly, to the access controlling system, the access controlling method, the access controlling program, and the recoding medium having the access controlling program recorded thereon, which controls the access by determining whether a label can be provided to the virtual machine and the resource.

### BACKGROUND

In an information system which needs high confidentiality , i.e., secrecy, and high integrity, i.e., tamper proofing or detection function, for information to be treated, an operating system (OS) level security has been implemented with a secure OS and a trusted OS. In such OSes, in brief, it is characterized by the fact that an operation (for example, reading and writing) by a subject (for example, a process) on an object (for example, a data file) is strictly controlled based on a predetermined "access control rule". This "access control rule" is also unexceptionally applied to a privileged user such as a root user. Control over the access from the subject to the object based on the access control rule is referred to as mandatory access control (MAC). In a typical implementation, the MAC is implemented in such a manner that "labels" are provided to subjects and objects, and an operation to be permitted or rejected between such labels is defined one by one under the access control rule.

As a virtualization technique has been widely used in recent years, demands have been increased for the mandatory access control in a hypervisor method in which a host OS is not needed and a virtual machine monitor functions in a lower layer than the OS. Here, the hypervisor is a control program or function on a layer between a virtual machine and hardware of a computer. The hypervisor can be, for example, realized by providing a kernel dedicated to the virtual machine. For example, the hypervisor has already been realized as access control module (ACM) in Xen (registered trademark) which is open source software (OSS). In the mandatory access control in the hypervisor, the subject is the virtual machine (VM), and the object is, for example, the resource such as the virtual disk volume.

Meanwhile, a patent document 1 (Japanese Patent Laid-Open Publication No. 08-87454) has proposed a method in which access right of a subject to an object is controlled according to a role membership of the subject associated with at least one role.

The labels provided to the subject and the object are a fundamental of the mandatory access control. Thus, an ability to provide the subject and the object with the label is to be limited only to a specific administrator. Particularly, in the case of a virtual environment including the hypervisor, it is preferable that permission or rejection control for providing labels can be executed with the role of the administrator taken into consideration so as to create a hierarchy in which a plurality of administrators exist in each virtual machine group and a further administrator who administers the entirety exists. That is, for example, in the case of the Xen, it is preferable that a plurality of administrators can be defined on a managing OS in the virtual machine (administration VM) managing the virtual machine group, and the permission or rejection for providing the label can be controlled according to the role of each administrator.

In the Xen, the managing OS is the Linux. Thus, it is possible to use RBAC (Roll-Based Access Control) which executes the permission or rejection for providing the label according to the role of the administrator when an SE Linux function is turned on. However, the following problems may be caused.

(1) In resources which are objects of the mandatory access control in the hypervisor, some resources such as the SCSI HBA (Host Bus Adapter) and the SCSI Target, which are not mapped to a file, are included. And the other resources such as an image file and a disk partition, which are mapped to the file on the managing OS, and are easily used from an RBAC function of the SE Linux. The RBAC can be utilized for the permission or rejection for providing the label to the resource. As described above, the resource which is not mapped to the file can not be provided with the label by using the RBAC.

(2) The virtual machine, which is a subject of the mandatory access control in the hypervisor, is not mapped to the file. Thus, the virtual machine can not be provided with a label by using the RBAC. As a result, it is not possible to execute the mandatory access control utilizing the label from the virtual machine to the resource.

It is preferable to execute QoS (Quality of Services) control over the access from the virtual machine to the resource in order to more precisely execute the access from the virtual machine to the resource. Such a QoS control is the control over transmission quality of information in the case of the access from the virtual machine to the resource in which, for example, throughput is guaranteed to ensure at lowest 10 Mbytes/ sec, while the throughput of more than 100 Mbytes/ sec is not permitted. However, conventionally, the QoS, which means service quality on a network, control has not been executed over the access from the virtual machine to the resource.

It is desirable to provide an access controlling system which enables the mandatory access control utilizing the label to be executed from the virtual machine to the resource.

It is also desirable to provide an access controlling method for enabling the mandatory access control utilizing the label to be executed from the virtual machine to the resource.

It is also desirable to provide an access controlling program for enabling the mandatory access control utilizing the label to be executed from the virtual machine to the resource.

Further, it is desirable to provide a recording medium having the access controlling program recorded thereon, which enables the mandatory access control utilizing the label to be executed from the virtual machine to the resource.

### SUMMARY

According to an aspect of the invention, an access controlling system includes a virtual machine monitor for controlling the access from the virtual machine to the resource by using a label provided to the virtual machine and the label provided to the resource, and a label provision capability determining unit of generating a virtual file for each virtual machine and each resource, determining whether the label can be provided to the generated virtual file, and determining contents of the labels provided to the virtual machine and the resource based on a result of the determination whether or not the label can be provided.

According to another aspect of the invention, an access controlling method includes generating the virtual file for each virtual machine and each resource, determining whether the label can be provided to the generated virtual file, determining contents of the labels provided to the virtual machine and the resource based on the result of the determination whether the label can be provided, and controlling the access from the virtual machine to the resource based on the contents of the labels provided to the virtual machine and the resource.

According to yet another aspect of the invention, a recording medium has an access controlling program recorded thereon, wherein the program causes a computer to execute a process for generating the virtual file for each virtual machine and each resource, determining whether the label can be provided to the generated virtual file, and determining contents of the labels provided to the virtual machine and the resource based on the result of the determination whether the label can be provided, and a process for controlling the access from the virtual machine to the resource based on the contents of the labels provided to the virtual machine and the resource.

The advantages of the invention will be realized and attained by means of the elements and combinations particularly pointed out in the claims. It is to be understood that both the foregoing general description and the following detailed description are exemplary and explanatory and are not restrictive of the invention, as claimed.

### BRIEF DESCRIPTION OF DRAWINGS

FIG. 1 is a diagram illustrating an exemplary configuration of an access controlling system of the present embodiment;
FIG. 2 is a diagram illustrating an example of a domain configuration file;
FIG. 3 is a diagram illustrating an exemplary data configuration of a label table;
FIG. 4 is a diagram illustrating the exemplary data configuration of quality information in a QoS table;
FIG. 5 is a diagram illustrating an example of an access controlling process flow of the present embodiment;
FIG. 6 and FIG. 7 are diagrams describing a process for providing a label to a virtual domain file and a virtual resource file;
FIG. 8 is a diagram describing an example of a process for generating the virtual resource file;
FIG. 9 is a diagram describing an example of a process for changing the label provided to the virtual resource file;
FIG. 10 is a diagram describing an example of the process for generating the virtual domain file;
FIG. 11 is a diagram describing an example of the process for changing the label provided to the virtual domain file;
FIG. 12 is a diagram describing access control using the label table; and
FIG. 13 is a diagram illustrating an example of a QoS controlling process flow.

### DESCRIPTION OF EMBODIMENTS

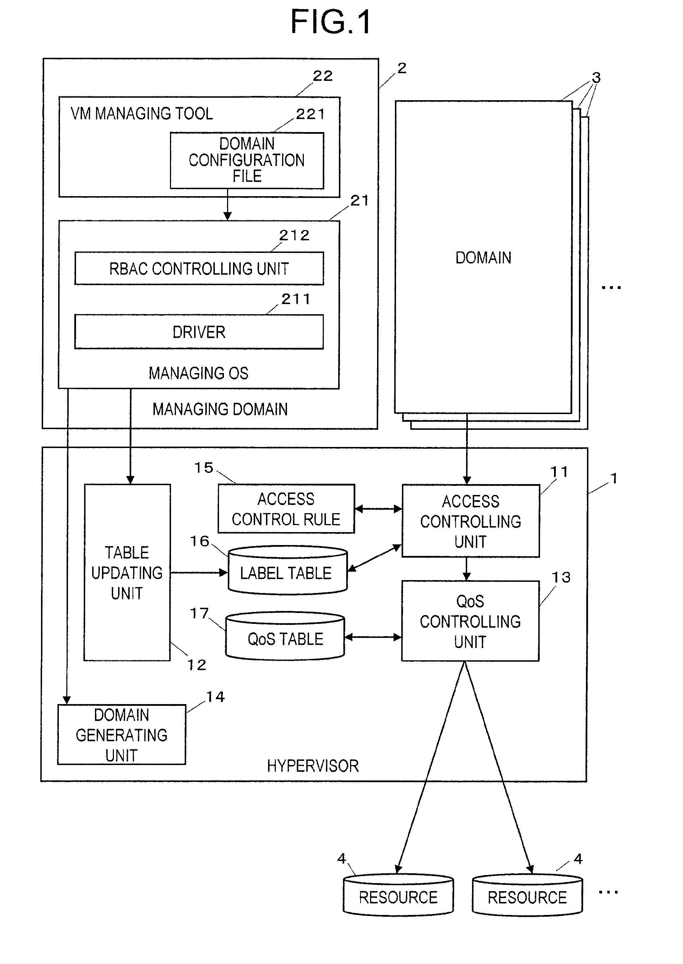

FIG. 1 is a diagram illustrating an exemplary configuration of an access controlling system of the present embodiment. The access controlling system illustrated in FIG. 1 is provided with a hypervisor 1 and a managing domain 2. The hypervisor 1 is a virtual machine monitor controlling an access from a domain 3 to resource 4 by using a label provided to one or more of the domains 3 and a label provided to one or more of the resources 4 which are resources such as virtual disk volumes. The managing domain 2 is a virtual machine, which manages the domain 3, realized on an information processing apparatus. The managing domain 2 includes a function as a label provision capability determining unit of generating a virtual file for each domain 3 and each resource 4, determining whether or not the label can be provided to the generated virtual file, and determining contents of the labels provided to the domain 3 and the resource 4 based on a result of the determination whether or not the label can be provided. The domain 3 is the virtual machine built on the information processing apparatus including the resource 4, and requests an access to the resource 4 for the hypervisor 1. The resource 4 is an access target from the domain 3. The resource 4 is, for example, a disk volume, or the like such as the HBA (Host Bus Adapter), the SCSI Target ID, the LUN (Logical Unit Number).

The hypervisor 1 is provided with an access controlling unit 11, a table updating unit 12, a QoS (Quality of Service) controlling unit 13, a domain generating unit 14, an access control rule 15, a label table 16, and a QoS table 17. The access controlling unit 11 receives an access request from the domain 3 to the resource 4, and determines permission or rejection for the access from the domain 3 to the resource 4 based on the content of the label stored in the label table 16 and the access control rule 15. The table updating unit 12 is notified by a driver 211, which is described later, in the managing domain 2. The label table 16 is updated based on the contents of the labels provided to the domain 3 and the resource 4.

The QoS controlling unit 13 controls transmission quality of information as quality of service when accessing from the domain 3 to the resource 4 based on quality information previously stored in the QoS table 17. The domain generating unit 14 generates the domain 3 according to a domain generating instruction from a virtual machine (VM) managing tool 22 in the managing domain 2. The access control rule 15 is information indicating whether or not the access from the domain 3 corresponding to one label to the resource 4 corresponding to another label is permitted. The access control rule 15 is previously stored in a predetermined storing unit. The label table 16 stores the contents of the labels for each domain 3 and each resource 4, that is, correspondence information between the domain 3 and the label provided to the domain 3, and the correspondence information between the resource 4 and the label provided to the resource 4. The QoS table 17 previously stores the quality information. The quality information is the correspondence information between the label provided to the domain 3 and the label provided to the resource 4, and a condition on the transmission quality of information when accessing from the domain 3 to the resource 4.

The managing domain 2 is provided with a managing OS 21 and the VM managing tool 22. The managing OS 21 generates the virtual file for each domain 3 and each resource 4, and determines whether or not the label can be provided to the generated virtual file. When being logged on by a user, the VM managing tool 22 reads a domain configuration file 221 previously stored in the predetermined storing means, and instructs the domain generating unit 14 in the hypervisor 1 to generate the domain 3 corresponding to the domain configuration file 221. The domain configuration file 221 includes a predetermined virtual domain file name which is a file name of the virtual file (virtual domain file) corresponding to the domain 3, information on the label corresponding to the domain 3, a resource file name which is the file name of the virtual file (virtual resource file) corresponding to the resource 4 to be assigned to the domain 3, and information on the label corresponding to the resource 4. In the present embodiment, the domain configuration file 221 corresponds to the domain 3 one by one. The VM managing tool 22 instructs the managing OS 21 to provide the labels to the virtual domain file and the virtual resource file generated by a driver 211, which is described later, in the managing OS 21. According to a designation input by the user, the VM managing tool 22 may instruct the managing OS 21 to change the labels provided to the virtual domain file and the virtual resource file.

The managing OS 21 is provided with the driver 211 and an RBAC controlling unit 212. The driver 211 generates the virtual domain file and the virtual resource file. The driver 211 stores the correspondence information between the virtual domain file and the domain 3, and the virtual resource file and the resource 4 as virtual file correspondence information in the predetermined storing means. The driver 211 determines the contents of the labels provided to the virtual domain file and the virtual resource file based on a result of the determination by the RBAC controlling unit 212, which is described later, whether or not the label can be provided to the virtual domain file and the virtual resource file. The driver 211 notifies the table updating unit 12 in the hypervisor 1 of the determined content of the label provided to the virtual domain file, and the determined content of the label provided to the virtual resource file as the content of the label provided to the domain 3 corresponding to the above virtual domain file, and the content of the label provided to the resource 4 corresponding to the above virtual resource file, respectively.

The RBAC controlling unit 212 includes authority information previously stored in the predetermined storing means. The authority information is related to an account of the user, and is, for example, information indicating whether or not it is permitted to provide the labels to the virtual domain file and the virtual resource file, and information indicating whether or not it is permitted to change the labels provided to the virtual domain file and the virtual resource file. The RBAC controlling unit 212 executes the role-based access control by using the authority information, and determines whether or not the labels can be provided to the virtual domain file and the virtual resource file. Specifically, for example, the RBAC controlling unit 212 determines based on the account of the user, which is inputted by the user, and the authority information, whether or not it is permitted for this user to provide the labels to the virtual domain file and the virtual resource file. For example, the RBAC controlling unit 212 determines based on the account of the user and the authority information whether or not it is permitted for this user to change the labels provided to the virtual domain file and the virtual resource file.

Meanwhile, the function of the access controlling system of the present embodiment, which is described by referring to FIG. 1, may be realized by a CPU and a program executed on the CPU. The above program can be stored in a computer-readable recording medium such as a semiconductor memory, a hard disk, a CD-ROM, and a DVD, and is recorded in the above recording medium to be provided, or is provided by transmitting and receiving utilizing a network through a communication interface.

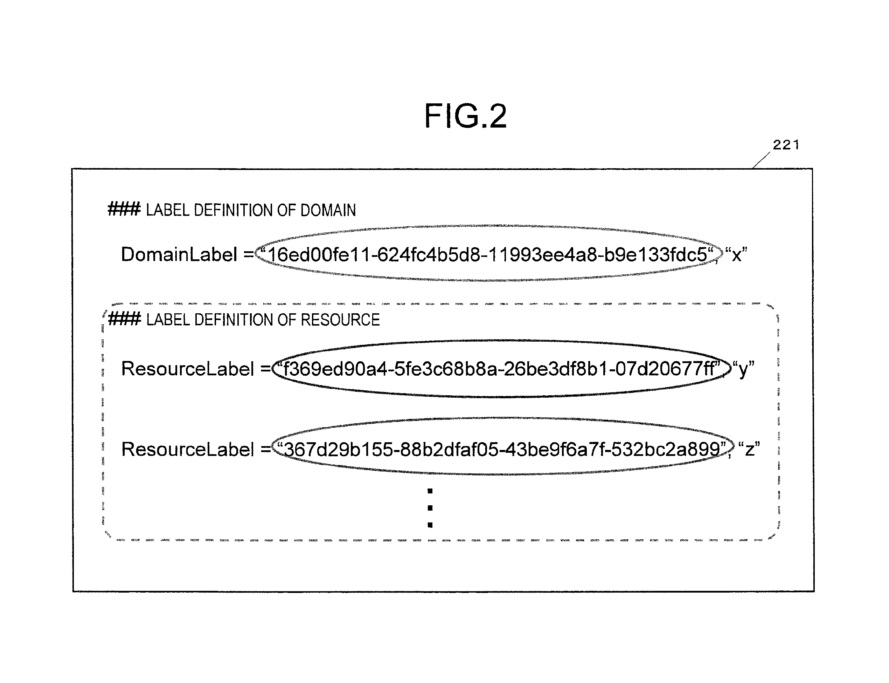

FIG. 2 is a diagram illustrating an example of the domain configuration file 221. In the domain configuration file 221, label definition of the domain such as DomainLabel = "16ed00.....", "x" in FIG. 2, and label definition of the resource such as ResourceLabel = "f369ed.....", "y", and ResourceLabel = "367d29b.....", "z" in FIG. 2 are previously defined. The label definition of the domain includes the virtual domain file name (for example, the file name such as "16ed00....." surrounded by an ellipse in FIG. 2) of the domain 3 corresponding to the domain configuration file 221, and the label (for example, the label such as "x" in FIG. 2) provided to the domain 3. The label definition of the resource includes a virtual resource file name (for example, the file name such as "f369ed.....", and "367d29b....." surrounded by the ellipses in FIG. 2) of the resource 4 to be assigned to the domain 3, and the label (for example, the label such as "y" and "z" in FIG. 2) provided to the resource 4.

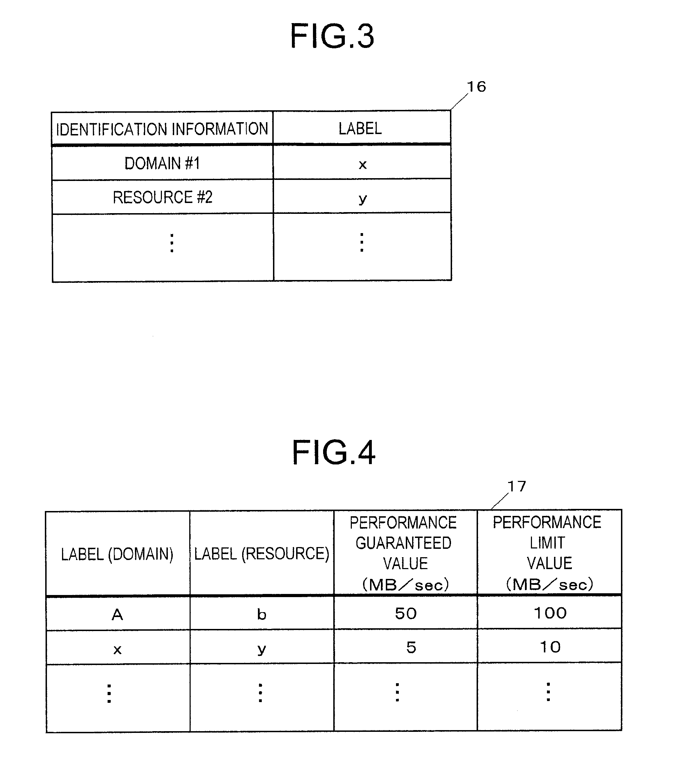

FIG. 3 is a diagram illustrating an exemplary data configuration of the label table 16. As illustrated in FIG. 3, the label table 16 includes the correspondence information between identification information and the label. The identification information is the identification information of the domain 3 or the resource 4. The label is the label provided to the domain 3, or is the label provided to the resource 4. By referring to the label table 16 illustrated in FIG. 3, it is understood that the label of x is provided to a domain #1, and the label of y is provided to a resource #2.

FIG. 4 is a diagram illustrating the exemplary data configuration of the quality information in the QoS table 17. In the QoS table 17 illustrated in FIG. 4, a performance guaranteed value (megabyte per second: MB/sec), a performance limit value (MB/sec) are setup as related to a label of a domain and a label of a resource. The label of the domain is the label provided to the domain 3. The label of the resource is the label provided to the resource 4. The performance guaranteed value (MB/sec) is the performance guaranteed value of a transmission rate of information to be transmitted from the domain 3 to the resource 4 when accessing from the domain 3 to the resource 4. The performance limit value (MB/sec) is an upper limit value of the transmission rate of the information to be transmitted from the domain 3 to the resource 4 when accessing from the domain 3 to the resource 4.

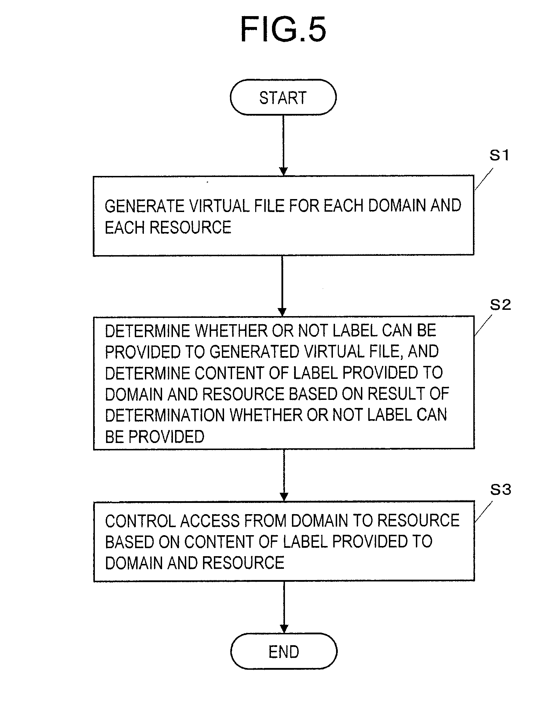

FIG. 5 is a diagram illustrating an example of an access controlling process flow of the present embodiment. First, the managing OS 21 of the managing domain 2 generates a virtual file for each virtual machine, that is, each domain 3, and each resource 4 (step S1). Next, the managing OS 21 determines whether or not the label can be provided to the generated virtual file, and determines the contents of the labels provided to the domain 3 and the resource 4 based on a result of the determination whether or not the label can be provided (step S2). The hypervisor 1 controls the access from the domain 3 to the resource 4 based on the determined contents of the labels provided to the domain 3 and the resource 4 (step S3).

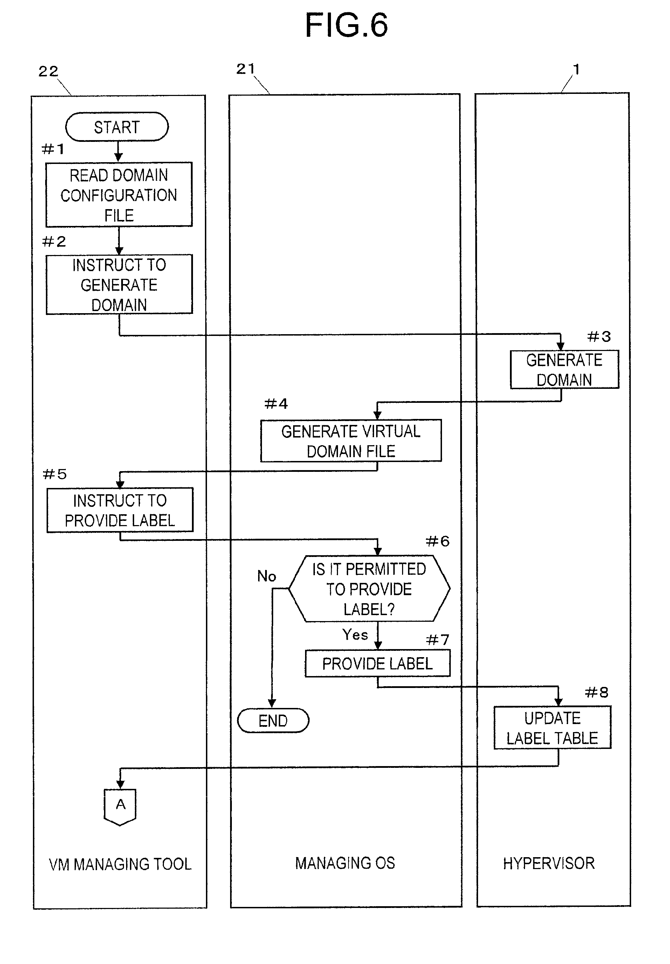

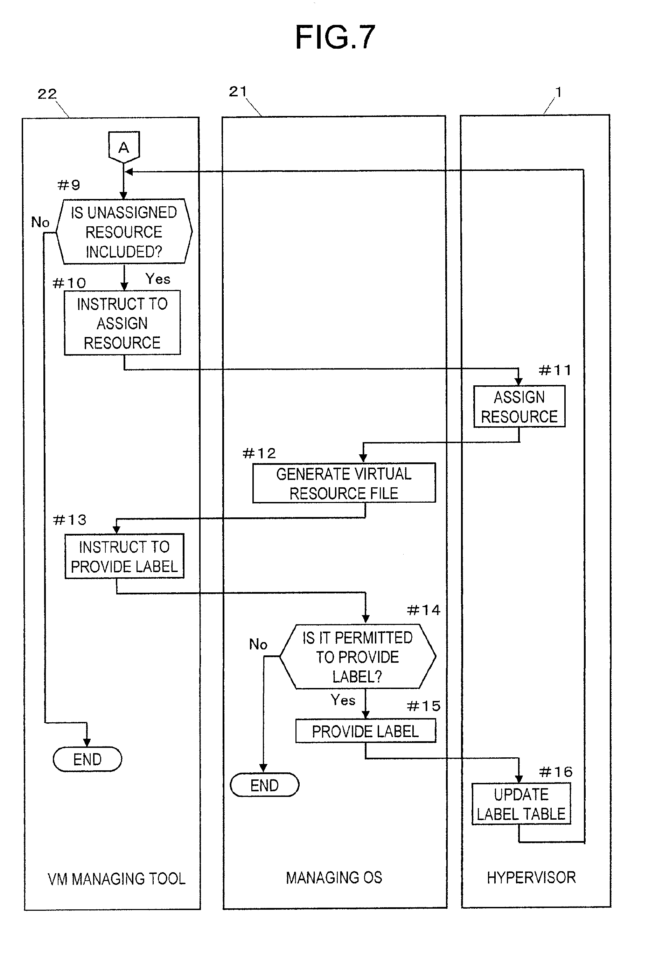

FIG. 6 and FIG. 7 are diagrams describing a process for providing labels for the virtual domain file and the virtual resource file in an access controlling process of the present embodiment. When the user logs on by inputting own account in the VM managing tool 22 in the managing domain 2, designates the domain configuration file 221, and inputs a command for instructing the domain 3 to be generated, the VM managing tool 22 reads the domain configuration file 221 (refer to #1 of FIG. 6). Next, the VM managing tool 22 instructs the hypervisor 1 to generate the domain 3 corresponding to the domain configuration file 221 (refer to #2 of FIG. 6). The VM managing tool 22 notifies the domain generating unit 14 in the hypervisor 1 of the above instruction through the driver 211 in the managing OS 21. Meanwhile, when notifying the above instruction, the VM managing tool 22 transmits the domain configuration file 221 to the driver 211 and the domain generating unit 14 in the hypervisor 1. The domain generating unit 14 generates the domain 3 according to the above instruction (refer to #3 of FIG. 6). Next, the driver 211 in the managing OS 21 generates the virtual domain file (refer to #4 of FIG. 6). Specifically, the driver 211 generates the virtual domain file (the virtual file corresponding to the domain 3 generated at #3 of FIG. 6) corresponding to the virtual domain file name which is included in the domain configuration file 221 which is transmitted from the VM managing tool 22. Next, the VM managing tool 22 instructs the managing OS 21 to provide the virtual domain file with the label (refer to #5 of FIG. 6). The above label is included in the label definition of the domain of the domain configuration file 221. The RBAC controlling unit 212 in the managing OS 21 determines whether or not it is permitted to provide the virtual domain file with the label (refer to #6 of FIG. 6). Specifically, the RBAC controlling unit 212 executes the role-based access control, and determines whether or not it is permitted to provide the above virtual domain file with the label based on the account of the user, which is inputted to the managing OS 21, and the authority information previously stored in the predetermined storing means.

When the RBAC controlling unit 212 determines that it is not permitted to provide the virtual domain file with the label, the process is completed. When the RBAC controlling unit 212 determines that it is permitted to provide the virtual domain file with the label, the driver 211 determines to provide the virtual domain file with the label, that is, determines the content of the label provided to the virtual domain file (refer to #7 of FIG. 6). Next, the driver 211 notifies the table updating unit 12 in the hypervisor 1 of the content of the label provided to the above virtual domain file, the table updating unit 12 updates the label table 16 by the notified content of the label (refer to #8 of FIG. 6), and the process proceeds to #9 of FIG. 7.

At #9 of FIG. 7, the VM managing tool 22 determines whether the resource 4, which is not assigned to the domain 3 corresponding to the virtual domain file provided with the label at #7 of FIG. 6, is included in the resource 4 corresponding to the virtual resource file name included in the label definition of the resource in the domain configuration file 221.

When the VM managing tool 22 determines that the resource 4, which is not assigned to the domain 3 corresponding to the virtual domain file, is not included, the process is completed. When the VM managing tool 22 determines that the resource 4, which is not assigned to the domain 3 corresponding to the virtual domain file, is included, the VM managing tool 22 instructs that the resource 4 is assigned to the domain 3 (refer to #10 of FIG. 7). The VM managing tool 22 notifies the hypervisor 1 of the above instruction through the driver 211 in the managing OS 21. When receiving the above notification, a predetermined processing unit (for example, the domain generating unit 14) included in the hypervisor 1 assigns the resource 4 to the domain 3 (refer to #11 of FIG. 7).

Next, the driver 211 in the managing OS 21 generates the virtual resource file (refer to #12 of FIG. 7). Specifically, the driver 211 generates the virtual resource file, which is the virtual resource file corresponding to the virtual resource file name included in the domain configuration file 221, and is the virtual resource file corresponding to the resource 4 assigned to the domain 3 at the above #11. Next, the VM managing tool 22 instructs the managing OS 21 to provide the generated virtual resource file with the label (refer to #13 of FIG. 7). Specifically, by referring to the label definition of the resource of the domain configuration file 221, the VM managing tool 22 instructs that the label is provided, which is included in the label definition of the resource, and is provided to the resource 4 corresponding to the above generated virtual resource file. The RBAC controlling unit 212 in the managing OS 21 determines whether or not it is permitted to provide the virtual resource file with the label (refer to #14 of FIG. 7). Specifically, the RBAC controlling unit 212 executes the role-based access control, and determines whether or not it is permitted to provide the above virtual resource file with the label based on the account of the user, which is inputted to the managing OS 21 by referring to FIG. 6, and the authority information previously stored in the predetermined storing means.

When the RBAC controlling unit 212 determines that it is not permitted to provide the virtual resource file with the label, the process is completed. When the RBAC controlling unit 212 determines that it is permitted to provide the virtual resource file with the label, the driver 211 determines to provide the virtual resource file with the label, that is, determines the content of the label provided to the virtual resource file (refer to #15 of FIG. 7). Next, the driver 211 notifies the table updating unit 12 in the hypervisor 1 of the content of the label provided to the above virtual domain file, the table updating unit 12 updates the label table 16 by the notified content of the label (refer to #16 of FIG. 7), and the process returns to the above #9.

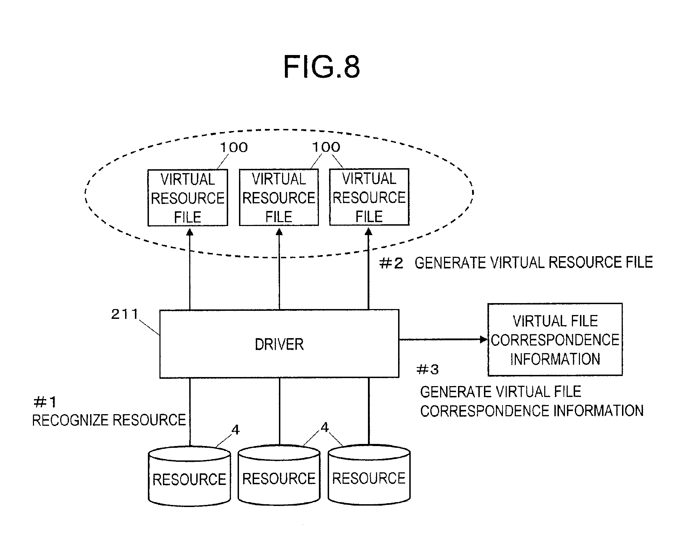

FIG. 8 is a diagram describing an example of a process for generating a virtual resource file 100. First, the driver 211 recognizes each resource 4 managed by the driver 211 (refer to #1 of FIG. 8). For example, when the driver 211 is a SCSI driver treating a SCSI device, the resource 4 managed by the driver 211 is the HBA, the SCSI Target ID, the LUN, or the like. Next, the driver 211 generates a virtual resource file 100 corresponding to each of the above recognized resources 4 (refer to #2 of FIG. 8). The driver 211 generates the correspondence information between the resource 4 and the virtual resource file 100 as the virtual file correspondence information, and stores the generated virtual file correspondence information in the predetermined storing means (refer to #3 of FIG. 8).

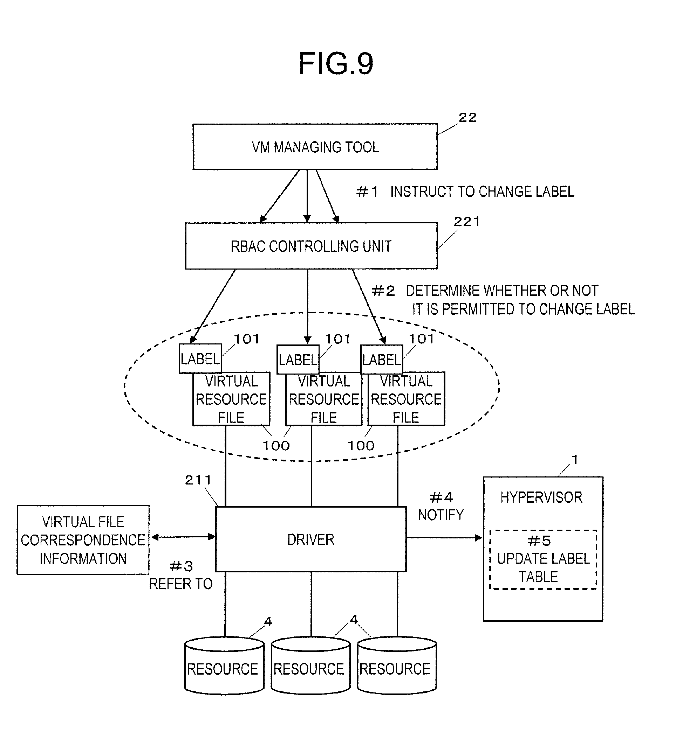

FIG. 9 is a diagram describing an example of a process for changing the label provided to the virtual resource file 100. First, the user logs on the VM managing tool 22, designates the virtual resource file 100 which needs to change a provided label 101, and the label (new label) which needs to be newly provided to the virtual resource file 100, and inputs the command for changing the label 101. The VM managing tool 22 instructs the managing OS 21 to change the label 101 provided to the virtual resource file 100 to the above new label (refer to #1 of FIG. 9). Next, the RBAC controlling unit 212 determines by using the authority information whether or not it is permitted to change the label 101 (refer to #2 of FIG. 9). In the example illustrated in FIG. 9, it is assumed that it is permitted to change the label 101 for the virtual resource file 100. The driver 211 refers to the virtual file correspondence information, and recognizes the resource 4 corresponding to the virtual resource file 100 in which it is permitted to change the label 101 (refer to #3 of FIG. 9). The driver 211 notifies the table updating unit 12 in the hypervisor 1 of the above permitted change of the label 101 as the change of the label 101 corresponding to the above recognized resource 4 (refer to #4 of FIG. 9). The table updating unit 12 reflects the notified change of the label 101 to the label table 16 to update the label table 16 (refer to #5 of FIG. 9).

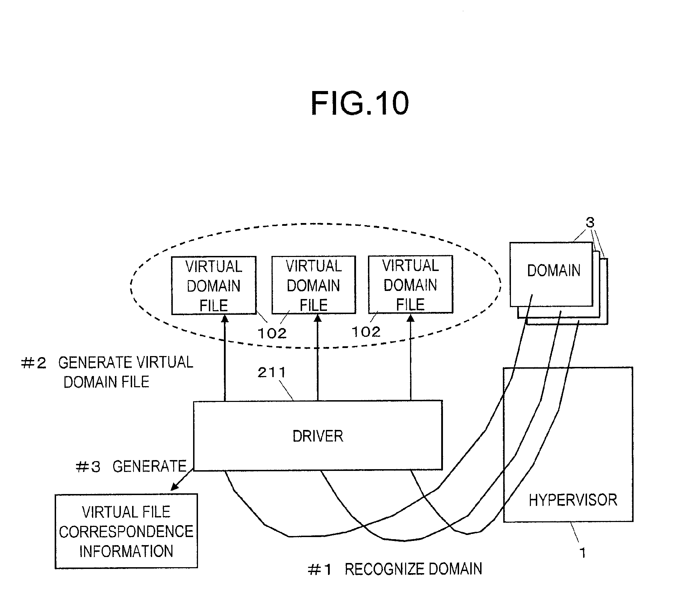

FIG. 10 is a diagram describing an example of the process for generating a virtual domain file 102. When the domain 3 is started, the driver 211 recognizes the started domain 3 (refer to #1 of FIG. 10). Next, the driver 211 generates the virtual domain file 102 corresponding to the recognized domain 3 (refer to #2 of FIG. 10). The driver 211 generates the correspondence information between the domain 3 and the virtual domain file 102 as the virtual file correspondence information, and stores the generated virtual file correspondence information in the predetermined storing means (refer to #3 of FIG. 10).

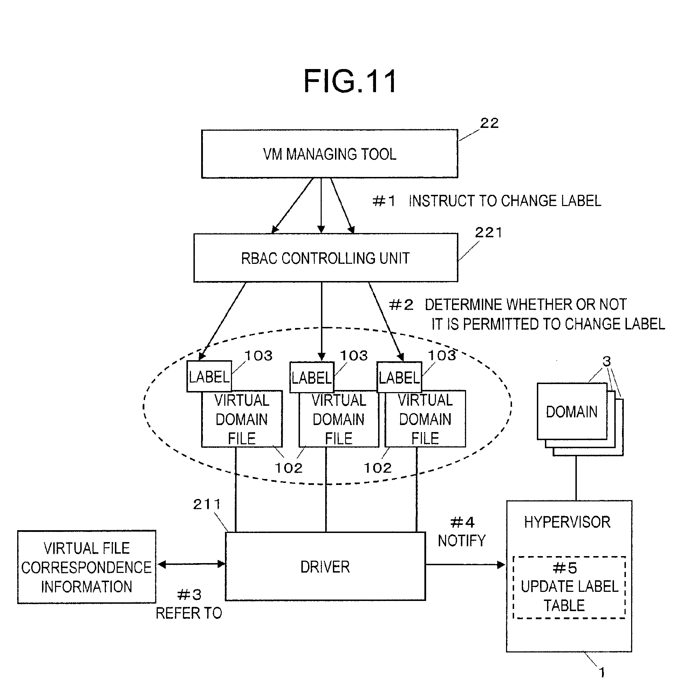

FIG. 11 is a diagram describing an example of the process for changing the label provided to the virtual domain file 102. First, the user logs on the VM managing tool 22, designates the virtual domain file 102 which needs to change a provided label 103, and the new label which needs to be newly provided to the virtual domain file 102, and inputs the command for changing the label 103. The VM managing tool 22 instructs the managing OS 21 to change the label 103 provided to the virtual domain file 102 to the new label (refer to #1 of FIG. 11). Next, the RBAC controlling unit 212 determines by using the authority information whether or not it is permitted to change the label 103 (refer to #2 of FIG. 11). In the example illustrated in FIG. 11, it is assumed that it is permitted to change the label 103 for the virtual domain file 102. The driver 211 refers to the virtual file correspondence information, and recognizes the domain 3 corresponding to the virtual domain file 102 in which it is permitted to change the label 103 (refer to #3 of FIG. 11). The driver 211 notifies the table updating unit 12 in the hypervisor 1 of the above permitted change of the label 103 as the change of the label 103 corresponding to the above recognized domain 3 (refer to #4 of FIG. 11). The table updating unit 12 reflects the notified change of the label 103 to the label table 16 to update the label table 16 (refer to #5 of FIG. 11).

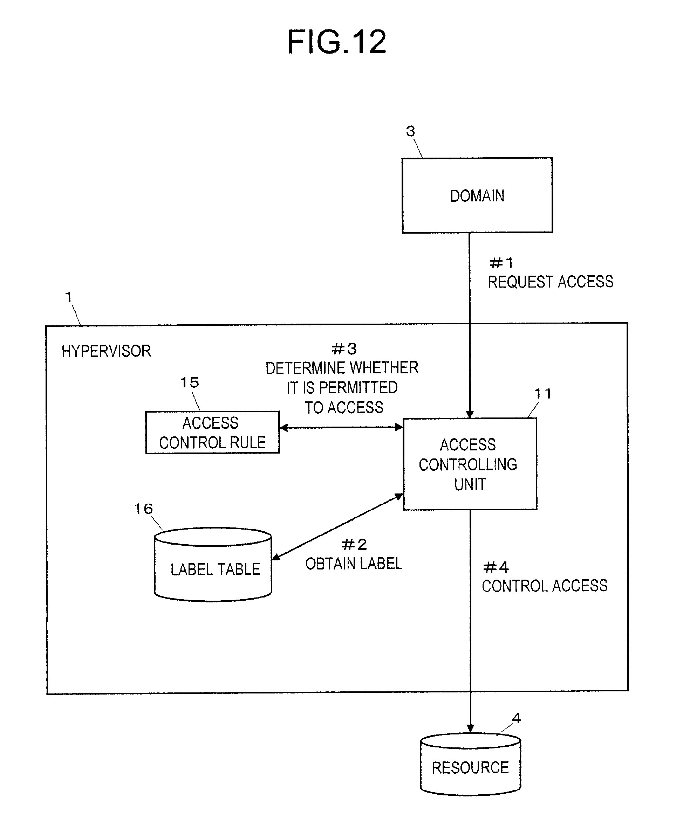

FIG. 12 is a diagram describing access control using the label table 16. First, the domain 3 requests the hypervisor 1 to access the resource 4 (refer to #1 of FIG. 12). Specifically, the domain 3 transmits the identification information on the domain 3 and the identification information on the resource 4 to which the domain 3 needs to access to the access controlling unit 11 of the hypervisor 1. Next, the access controlling unit 11 refers to the label table 16, and obtains the label provided to the domain 3 which requests the access, and the label provided to the resource 4 to which the domain 3 needs to access (refer to #2 of FIG. 12). Specifically, the access controlling unit 11 obtains the label corresponding to the identification information on the domain 3 as the label provided to the domain 3, and obtains the label corresponding to the identification information on the resource 4 as the label provided to the resource 4 in the label table 16. Next, the access controlling unit 11 determines whether or not it is permitted to access from the domain 3 to the resource 4 based on the access control rule 15 previously stored in the predetermined storing means, and the obtained labels of the domain 3 and resource 4 (refer to #3 of FIG. 12). The access controlling unit 11 controls (permits or rejects) the access from the domain 3 to the resource 4 based on a result of the above determination (refer to #4 of FIG. 12).

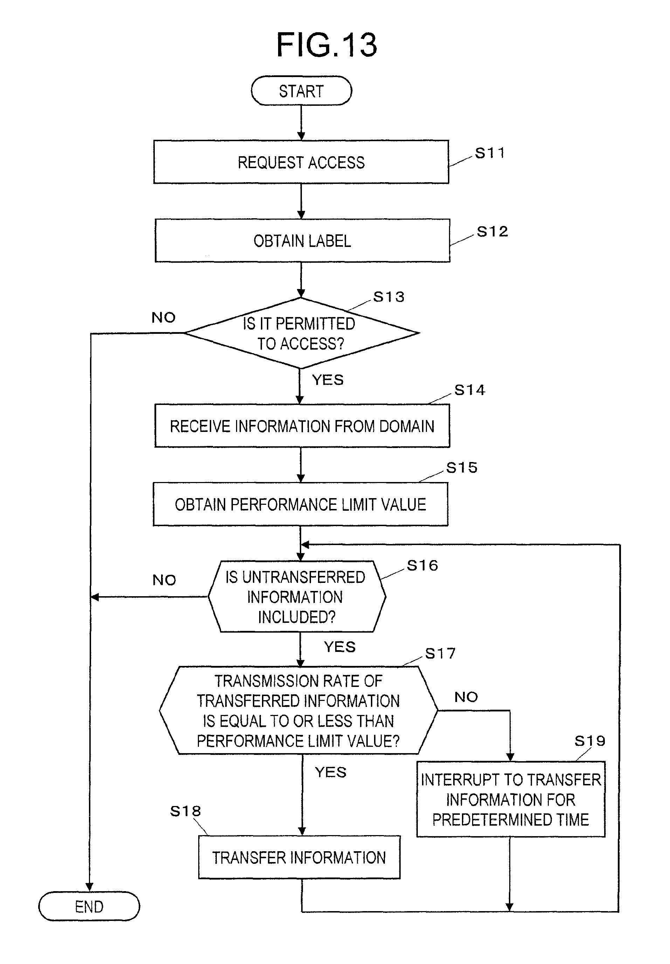

FIG. 13 is a diagram illustrating an example of a QoS controlling process flow by the access controlling system of the present embodiment. First, the domain 3 requests the hypervisor 1 to access the resource 4 (step S11). Specifically, the domain 3 transmits a domain #1 which is the identification information on the domain 3 and a resource #2 which is the identification information on the resource 4 to which the domain 3 needs to access to the access controlling unit 11 of the hypervisor 1. Next, the access controlling unit 11 refers to the label table 16, and obtains the label provided to the domain 3 which requests the access, and the label provided to the resource 4 to be accessed by the domain 3 (step S12). Specifically, for example, the access controlling unit 11 obtains "x" which is the label corresponding to the domain #1 as the label provided to the domain 3, and obtains "y" which is the label corresponding to the resource #2 as the label provided to the resource 4 in the label table 16 illustrated in FIG. 3. Next, the access controlling unit 11 determines whether or not it is permitted to access from the domain 3 to the resource 4 based on the access control rule 15 previously stored in the predetermined storing means, and the obtained labels "x" and "y" (step S13). When the access controlling unit 11 determines that it is not permitted to access from the domain 3 to the resource 4, the process is completed.

When the access controlling unit 11 determines that it is permitted to access from the domain 3 to the resource 4, the QoS controlling unit 13 receives, from the domain 3, information transmitted from the domain 3 to the resource 4 when accessing from the domain 3 to the resource 4 (step S14). The QoS controlling unit 13 refers to the QoS table 17, and obtains the upper limit value (performance limit value) of the transmission rate of the information transmitted from the domain 3 to the resource 4 (step S15). For example, as referring to the QoS table 17 illustrated in FIG. 4, the performance limit value is 10 MB/sec when accessing from the domain 3 provided with the label "x" to the resource 4 provided with the label "y". Thus, the QoS controlling unit 13 obtains 10 MB/sec as the above upper limit value of the transmission rate of the information transmitted from the domain 3 to the resource 4.

Next, the QoS controlling unit 13 determines whether information, which is not transmitted from the QoS controlling unit 13 to the resource 4, is included in the information received from the domain 3 (step S16). When the QoS controlling unit 13 determines that the information, which is not transmitted to the resource 4, is not included, the process is completed. When the QoS controlling unit 13 determines that the information, which is not transmitted to the resource 4, is included, the QoS controlling unit 13 determines whether the transmission rate of the information transmitted to the resource 4 is equal to or less than the above performance limit value (step S17). When the QoS controlling unit 13 determines that the transmission rate of the information transmitted to the resource 4 is equal to or less than the performance limit value, the QoS controlling unit 13 transfers the information to the resource 4 (step S18), and the process returns to the above step S16. When the QoS controlling unit 13 determines that the transmission rate of the information transmitted to the resource 4 is not equal to or less than the performance limit value, the QoS controlling unit 13 interrupts to transfer the information to the resource 4 for a predetermined time (step S19), and the process returns to the above step S16.

In the discussed embodiment according to the access controlling system, the access controlling method, and the recording medium having the present access controlling program recorded thereon, the virtual file for each virtual machine and each resource is generated, contents of the labels provided to the virtual machine and the resource are determined based on the result of the determination whether or not the label can be provided to the virtual file, and the access from the virtual machine to the resource is controlled based on the determined contents of the labels. Thus, according to the present access controlling system, the present access controlling method, the present access controlling program, and the recording medium having the present access controlling program recorded thereon, it becomes possible to execute the mandatory access control utilizing the label from the virtual machine to the resource.

All examples and conditional language recited herein are intended for pedagogical purposes to aid the reader in understanding the invention and the concepts contributed by the inventor to furthering the art, and to be construed as being without limitation to such specifically recited examples and conditions, nor does the organization of such examples in the specification relate to a showing of the superiority and inferiority of the invention. Although the embodiment(s) of the present invention have been described in detail, it should be understood that the various changes, substitutions, and alterations could be made hereto without departing from the spirit and scope of the invention.
In any of the above aspects, the various features may be implemented in hardware, or as software modules running on one or more processors. Features of one aspect may be applied to any of the other aspects.
The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. An access controlling system of the information processing apparatus controlling an access from a virtual machine built on the information processing apparatus including a resource to the resource, the system comprising:
a virtual machine monitor for controlling the access from the virtual machine to the resource by using a label provided to the virtual machine and the label provided to the resource; and
a label provision capability determining unit of generating a virtual file for each virtual machine and each resource, determining whether the label can be provided to the generated virtual file, and determining contents of the labels provided to the virtual machine and the resource based on a result of the determination whether the label can be provided.

2. The access controlling system according to Claim 1, wherein the label provision capability determining unit includes a role-based access controlling unit of executing the role-based access control and determining whether or not the label can be provided to the virtual file.

3. The access controlling system according to Claim 1 or 2, wherein the virtual machine monitor further controls the transmission quality of information when accessing from the virtual machine to the resource based on the correspondence information, which is previously stored in the storing means, between the label provided to the virtual machine and the label provided to the resource, and the condition on the transmission quality of information when accessing from the virtual machine to the resource.

4. An access controlling method of the information processing apparatus controlling the access from the virtual machine built on the information processing apparatus including the resource to the resource, the method comprising:
generating the virtual file for each virtual machine and each resource, determining whether or not the label can be provided to the generated virtual file;
determining the contents of the labels provided to the virtual machine and the resource based on the result of the determination whether the label can be provided; and
controlling the access from the virtual machine to the resource based on the contents of the labels provided to the virtual machine and the resource.

5. The access controlling method according to Claim 4, further comprising:
executing the role-based access control; and
determining whether or not the label can be provided to the virtual file.

6. The access controlling method according to Claim 4 or 5, further comprising:
controlling the transmission quality of information when accessing from the virtual machine to the resource based on the correspondence information, which is previously stored in the storing means, between the label provided to the virtual machine and the label provided to the resource, and the condition on the transmission quality of information when accessing from the virtual machine to the resource.

7. A computer-readable recording medium having the access controlling program recorded thereon, the access controlling program controlling the access from the virtual machine built on the information processing apparatus including the resource to the resource, and causing the information processing apparatus to execute:
a process for generating the virtual file for each virtual machine and each resource, determining whether or not the label can be provided to the generated virtual file, and determining the contents of the labels provided to the virtual machine and the resource based on the result of the determination whether or not the label can be provided; and
a process for controlling the access from the virtual machine to the resource based on the contents of the labels provided to the virtual machine and the resource.

8. The computer-readable recording medium having the access controlling program recorded thereon according to Claim 7, further causing the information processing apparatus to execute:
a process for executing the role-based access control and determining whether or not the label can be provided to the virtual file.

9. The computer-readable recording medium having the access controlling program recorded thereon according to Claim 7 or 8, further causing the information processing apparatus to execute:
a process for controlling the transmission quality of information when accessing from the virtual machine to the resource based on the correspondence information, which is previously stored in the storing means, between the label provided to the virtual machine and the label provided to the resource, and the condition on the transmission quality of information when accessing from the virtual machine to the resource.
